# EUROPÄISCHE PATENTSCHRIFT

(11) **EP 2 139 709 B1**
(45) Veröffentlichungstag und Bekanntmachung des Hinweises auf die Patenterteilung: **14.07.2010**
(21) Anmeldenummer: 08715823.4
(22) Anmeldetag: 18.02.2008
(51) Int. Cl.: B60H 1/34

(54) **LUFTAUSSTRÖMER MIT DRALLSTRÖMUNG UND KONVENTIONELLER STRÖMUNG**
AIR OUTLET HAVING A SWIRLING FLOW, AND CONVENTIONAL FLOW
AÉRATEUR À ÉCOULEMENT TURBULENT ET ÉCOULEMENT CLASSIQUE

(30) Priorität: 02.03.2007 DE 102007010795
(43) Veröffentlichungstag der Anmeldung: 06.01.2010
(73) Patentinhaber: Behr GmbH & Co. KG, 70469 Stuttgart (DE)
(72) Erfinder: KLINGLER, Dietrich, 73540 Heubach (DE)
(86) Internationale Anmeldenummer: PCT/EP2008/001223
(87) Internationale Veröffentlichungsnummer: WO 2008/107070

(56) Entgegenhaltungen:
- DE-A1- 10 232 422
- FR-A- 2 794 690
- GB-A- 2 391 932

## Beschreibung

Die Erfindung betrifft einen Luftausströmer, insbesondere für eine Klimatisierung eines Fahrzeuginnenraums.

Im Stand der Technik sind Luftausströmer in diversen Varianten bekannt. Sie dienen dazu, im Fahrzeuginnenraum schnell ein angenehmes Klima zu schaffen. Es ist ihre Aufgabe, zu diesem Zweck genügend Luft in den Innenraum zu befördern.

So beschreibt die DE 100 36 776 A1 eine Einrichtung zur Klimatisierung eines Innenraumes, insbesondere eine Fahrzeug-Klimatisierungseinrichtung, mit einem Klimagerät mit einer Klimaluft-Führung sowie mit einem Luftheizgerät mit einer Heizluft-Führung. Die Klimaluft-Führung und die Heizluft-Führung sind mit dem Innenraum verbunden und über ein Mündungsstück in Form einer Doppeldüse zusammengeführt, welche ein Innenrohr und ein konzentrisches Außenrohr aufweist. Dabei kann im Ringraum zwischen dem Innenrohr und Außenrohr eine Drallströmungs-Leiteinrichtung vorgesehen sein, die vorzugsweise einstellbar ist. Bei dieser Einrichtung handelt es sich um einen zweikanaligen Luftausströmer mit einem inneren Luftführungskanal für einen konzentrierten Luftstrahl (auch Spotbereich genannt) und einem äußeren Luftführungskanal für eine Drallströmung (auch Diffusbereich genannt). In vollständig geöffneter Stellung hat der Diffusbereich einen hohen Druckabfall und eine starke Geräuschentwicklung. Die Effizienz des Spotbereichs wird dadurch reduziert.

Die DE 299 14 962 U1 beschreibt einen einkanaligen Luftausströmer, insbesondere für eine Kraftfahrzeuglüftung, mit einem Drallgeber, der mehrere Leitschaufeln hat, die jeweils um eine Schwenkachse verschwenkbar sind. Die Schwenkachsen sind etwa radial um eine gemeinsame Zentralachse angeordnet, wobei eine Drehbewegung der Zentralachse als Schwenkbewegung auf die Schwenkachsen der Leitschaufeln übertragbar ist. Die den Leitschaufeln zugeordneten Schwenkachsen sind jeweils mit einem Reib- oder Zahnrad drehfest verbunden, welche mit einem zentralen Reib- oder Zahnrad der Zentralachse in Antriebsverbindung stehen. Die Zentralachse trägt an ihrem abströmseitigen Achsende eine manuell betätigbare Drehhandhabe. Bei diesem Luftausströmer kann aufgrund der geringen Tiefe und geringen Ablenkungswirkung des Drallgebers nur eine Strömung mit schwachem Drall erzeugt werden.

Aus der EP 0 936 091 B1 ist ein Luftausströmer bekannt, bei welchem eine Leitrampe in Spiral- oder Helixform vorgeschlagen wird. Diese bewirkt eine Strömung mit starkem Drall und damit eine größere Verteilung des in ihr geführten Luftstroms in Art eines Diffusbereiches. Durch die konstante Drallströmung im Diffusbereich dieses Luftausströmers ist jedoch eine Anpassung der Klimatisierungswirkung an jeweilige Umgebungsbedingungen nicht möglich.

Aus der DE 10 2005 036 159 A1 ist eine weitere Luftstromsteuereinheit bekant, welche mehrere bewegliche Luftleitelemente zur Erzeugung einer konzentrischen Luftströmung und wenigstens einer drallartigen Strahlaufspreizung aufweist, wobei die wenigstens eine drallartige Luftströmung stufenlos eingestellt werden kann.

Aus der GB 2391932, die den nächstliegenden Stand der Technik darstellt, ist eine weitere gattungsgemäße Luftstromsteuereinheit bekannt.

Der Erfindung liegt die Aufgabe zugrunde, einen Luftausströmer der eingangs genannten Art anzugeben, welcher bei einfachem Aufbau eine Anpassung einer Klimatisierungswirkung erlaubt, wobei ein breiter Variationsbereich der Anpassung möglich sein soll.

Die Aufgabe wird erfindungsgemäß gelöst durch einen Luftausströmer, welcher die in Anspruch 1 angegebenen Merkmale aufweist.

Vorteilhafte Ausgestaltungen des Verfahrens sind Gegenstand der Unteransprüche.

Die Erfindung schlägt einen Luftausströmer, der ein zweiteiliges Gehäuse umfasst, welches im zusammengebauten Zustand im Wesentlichen kugelförmig ist und in welchem ein erstes Luftleitelement und ein zweites Luftleitelement angeordnet sind, wobei das erste Luftleitelement als ein Ringelement ausgebildet ist, an welchem radial nach innen weisend Schaufeln eines starren Schaufelkranzes angeordnet sind, deren Schaufelenden auf einem im Ringelement zentrisch angeordneten Hohlzylinder für eine spotförmige Luftausströmung befestigt sind, und das zweite Luftleitelement aus mindestens einem weiteren Schaufelkranz mit mehreren Schaufeln gebildet ist, deren jeweils radial nach innen weisendes Schaufelende beweglich auf dem Hohlzylinder und deren radial nach außen weisendes Schaufelende beweglich in einer vorgegebenen Anzahl von im Gehäuse frei beweglich angeordneten Ringsegmente angeordnet sind.

Durch eine derartige Anordnung eines beweglichen Schaufelkranzes in im Gehäuse beweglich gelagerten Ringsegmenten ist im schwenkbaren Bereich des Luftausströmers zur Einstellung der Strömungsrichtung eine einstellbare Diffusströmung durch die Verstellung des beweglichen Schaufelkranzes möglich. Ein derartiger Aufbau des Luftausströmers ermöglicht eine besonders kompakte Bauform. Darüber hinaus ist eine bi-funktionale kompakte Düse ermöglicht, welche im Modus Drall- oder Diffusströmung und konventioneller oder gleich gerichteter Strömung oder Spotströmung betrieben werden kann. Dabei kann die jeweils erzeugte Strömung umgelenkt oder in vorgegebener Richtung ausgestrahlt werden.

In einer bevorzugten Ausführungsform sind der starre Schaufelkranz und der mindestens eine bewegliche Schaufelkranz in Längsausdehnung des Hohlzylinders nacheinander angeordnet.

Um eine den Klimakomfort im Fahrzeuginnenraum unterstützende Diffusströmung zu ermöglichen, sind in Längsausdehnung des Hohlzylinders mindestens zwei bewegliche Schaufelkränze vorgesehen, die radial nach außen in den Ringsegmenten beweglich angeordnet sind. Mittels des oder der Schaufelkränze wird die Luftströmung in Querrichtung zur Längsachse des Luftausströmers nach außen an die Innenwandung der Ringsegmente umgelenkt und somit verdrallt. Solange die verdrallte Luftströmung die Ringsegmente durchfließt, wirken deren Wände entgegen der Zentrifugalkraft der verdrallten Luftströmung. Am Ausgang des Luftausströmers platzt die Luftströmung in radialer Richtung auf und strömt diffus in den Fahrzeuginnenraum. Vorzugsweise sind die beweglichen Schaufelkränze kurz vor dem Strömungsaustritt des Luftausströmers angeordnet. Bedingt durch den Schaufelkranz wird die Luftströmung nur über einen kurzen Weg verdrallt, wodurch die Luftströmung vorher keine großen Umlenkungen erfährt und dadurch weniger Druckverlust aufweist. Durch die Nutzung eines größeren Querschnitts - durch die kugelförmige oder bauchige Ausgestaltung der Ringsegmente - und die Verdrallung der Luftströmung auf kürzerem Wege ergeben sich zudem geringere benetzte Flächen und geringere Strömungsgeschwindigkeiten. Daraus resultieren wiederum geringere Druckverluste und ein besseres akustisches Verhalten.

Zweckmäßigerweise ist der Hohlzylinder um den Umfang in einem Kreis verteilt mit einer Anzahl von Ausnehmungen zur Aufnahme der Schaufelenden des weiteren, beweglichen Schaufelkranzes versehen. Dabei ist bevorzugt eine der Anzahl der weiteren beweglichen Schaufelkränze entsprechende Anzahl von Kreisen mit jeweils um den Umfang des Hohlzylinders verteilt angeordneten Ausnehmungen vorgesehen.

In einer einfachen Ausführungsform sind die Schaufeln des mindestens einen beweglichen Schaufelkranzes endseitig mit Stiften versehen, die an einem Ende in den insbesondere kreisförmigen Ausnehmungen des Hohlzylinders und am anderen Ende in Linienführungen der Ringsegmente beweglich angeordnet sind. Hierdurch können die Schaufeln des Schaufelkranzes wendel- oder spiralförmig verdreht oder gewunden oder verstellt werden.

Zur Unterstützung einer derartigen Verdrehung, Verwindung bzw. Verstellung der Schaufeln verlaufen die Linienführungen im Wesentlichen bogenförmig. Daraus resultierende wendel- oder spiralförmig verdrehte, gewundene oder verstellte Schaufeln dienen der Verdrallung des Luftstroms und somit einem diffusen Luftaustritt. Diese Ausführung wird auch Helix genannt. Durch mehrere in Längsausdehnung des Luftausströmers nacheinander angeordnete Schaufelkränze kann eine Einfach- oder Mehrfach-Helix gebildet werden. Im Detail wird zum Erzeugen einer einstellbaren Drall- oder Diffusströmung das zweite Luftleitelement, d.h. insbesondere die Schaufeln des oder der Schaufelkränze entsprechend verstellt, so dass mindestens eine Helix gebildet ist. Im Sinne der Erfindung kommt als Helix für den Schaufelkranz jede sich rotierend in die Tiefe des Raumes des Luftausströmers fortsetzende Struktur in Betracht. Eine solche Struktur kann insbesondere spiralförmig oder als schraubenförmige Wendel ausgebildet sein.

Je nach Vorgabe können die Schaufeln des jeweiligen Schaufelkranzes als Dreieck- oder Viereckflügel ausgebildet sind. Auch kann die Schaufel jede andere geeignete Form aufweisen.

Zur Unterstützung der Verdrehung, Verstellung bzw. Verwindung der Schaufeln des beweglichen Schaufelkranzes sind diese vorzugsweise flexibel ausgebildet und verwindbar gelagert. Auch können die Schaufeln des starren und beweglichen Schaufelkranzes gekrümmt oder eben ausgebildet sein.

In einer einfachen Ausführungsform bildet der Hohlzylinder einen inneren Luftführungskanal für eine spotförmige Luftausströmung. Die Ringsegmente bilden im zusammengebauten Zustand einen äußeren Luftführungskanal zur diffusen Luftausströmung, wobei der äußere Luftführungskanal den inneren Luftführungskanal umgibt und parallel zu diesem verläuft. Mit anderen Worten. Der außere, durch die Ringsegmente gebildete Luftführungskanal und der innere durch den Hohlzylinder gebildete Luftführungskanal sind zylindrisch und koaxial ausgebildet. Dies ermöglicht eine einfache Montage und Herstellung durch Zusammensetzen von schalenförmigen, insbesondere halb- oder viertelschaligen Segmenten, z.B. zwei halbschalige Gehäuseteile, vier viertelschalige Ringsegmente, und einen symmetrischen Strömungsverlauf.

Bevorzugt sind die Schaufeln des mindestens einen beweglichen Schaufelkranzes mittels eines Verstellelementes gemeinsam und synchron verstellbar. Hierdurch ist eine symmetrische Helix-Form des beweglichen Schaufelkranzes einstellbar.

Vorzugsweise ist das Verstellelement strömungsausgangsseitig auf Ringsegmente zur Verstellung der in den Ringsegmenten gehaltenen Schaufeln aufsetzbar.

Dabei ist das Verstellelement als ein Verstellring ausgebildet, der mit Ausnehmungen versehen ist, die in die äußeren Stifte der Schaufeln des beweglichen Schaufelkranzes eingreifen, und der strömungsausgangsseitig einen geformten Rand aufweist, der auf die Ringsegmente umlaufend aufsetzbar ist. Der Rand ist beispielsweise mit einer entsprechenden Struktur, z.B. Greifstruktur, versehen, die ein einfaches Bedienen ermöglicht.

Zusätzlich kann das Verstellelement strömungsausgangsseitig mit festen oder verstellbaren Streben oder Lamellen versehen sein.

Zur Vermeidung einer Verkantung oder eines Verdrehens des Verstellelements im Gehäuse ist das Verstellelement an den Ringsegmenten arretierbar angeordnet ist. Somit werden bzw. wird mittels des arretierten Verstellelements eine Verstellung der Schaufeln des Schaufelkranzes zur Einstellung der Diffusströmung und/oder eine Verstellung der Ringsegmente zur Einstellung einer Strömungsrichtung sichergestellt.

Zur Einstellung der Strömungsrichtung ist vorzugsweise das zweite Luftleitelement mit dem mindestens einem beweglichen Schaufelkranz und den Ringsegmenten im Wesentlichen kugelförmig ausgebildet, wobei das zweiteilige Gehäuse im zusammengebauten Zustand eine Kugelpfanne bildet, in welche das zweite Luftleitelement, insbesondere dessen Ringsegmente in Art eines Kugelgelenks drehbar gelagert sind.

Je nach Vorgabe kann der Luftausströmer mehrere gleichartige oder verschiedenartige erste und zweite Luftleitelemente umfassen, die bevorzugt entlang der Längsachse des Luftausströmers hintereinander angeordnet sind.

Alternativ zur Ausbildung als Verstellring kann das Verstellelement auch eine andere geeignete Form aufweisen. Beispielsweise kann das Verstellelement auch als Drehknopf und Kegelzahnrad ausgebildet sein.

Vorteilhaft ist, dass das Verstellelement strömungsausgangsseitig mit festen oder verstellbaren Streben oder Lamellen versehen ist.

Vorteilhaft ist, dass das Verstellelement an den Ringsegmenten arretierbar angeordnet ist.

Vorteilhaft ist, dass das zweite Luftleitelement mit dem mindestens einem Schaufelkranz und den Ringsegmenten im Wesentlichen kugelförmig ausgebildet ist und das zweiteilige Gehäuse im zusammengebauten Zustand eine Kugelpfanne bildet, in welche das zweite Luftleitelement in Art eines Kugelgelenks drehbar gelagert ist.

Vorteilhaft ist, dass mehrere gleichartige oder verschiedenartige erste und zweite Luftleitelemente entlang der Längsausdehnung des Luftausströmers hintereinander angeordnet sind.

Ausführungsbeispiele der Erfindung werden anhand von Zeichnungen näher erläutert. Darin zeigen:
- Fig. 1: eine perspektivische Darstellung eines Luftausströmers in Explosi- onsdarstellung mit einem ersten Luftleitelement mit einem starren Schaufelkranz und einem Spotkanal und einem zweiten Luftleitele- ment mit mindestens einem beweglichen Luftleitelement, die von ei- nem zweiteiligen Gehäuse umgeben sind, auf welches ein Verstell- element zentrisch angeordnet ist,
- Fig. 2: eine perspektivische Darstellung von Komponenten - Ringsegmen- ten - des Luftausströmers gemäß Figur 1 im nicht zusammengebau- ten Zustand,
- Fig. 3: schematisch das zweiteilige Gehäuse gemäß Figur 1 in perspektivi- scher Darstellung,
- Fig. 4: schematisch eine vereinfachte Darstellung des Luftausströmers ge- mäß Figur 1 im Längsschnitt, und
- Fig. 5: schematisch den Luftausströmer gemäß Figur 1 im zusammenge- bauten Zustand in perspektivischer Darstellung.

Einander entsprechende Teile sind in allen Figuren mit den gleichen Bezugszeichen versehen.

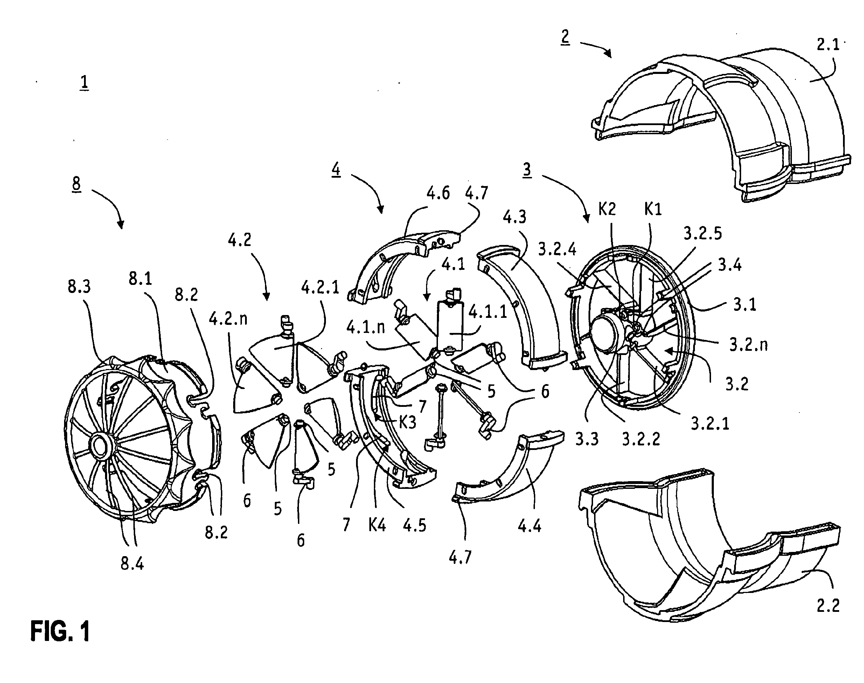

Der in Figur 1 dargestellte Luftausströmer 1, insbesondere für eine Klimatisierung eines Fahrzeuginnenraumes, umfasst ein zweiteiliges im Wesentlichen kugelförmiges Gehäuse 2. Das Gehäuse 2 ist aus zwei Halbschalen 2.1 und 2.2 gebildet. Das Gehäuse 2 kann beispielsweise aus einem Kunststoffformteil oder einem anderen geeigneten Material gebildet sein.

Das Gehäuse 2 dient der Aufnahme eines ersten Luftleitelement 3 und eines zweiten Luftleitelement 4 zur Einstellung verschiedener Strömungsarten. Das erste Luftleitelement 3 ist als ein Ringelement 3.1 ausgebildet, an welchem radial nach innen weisend Schaufeln 3.2.1 bis 3.2.n eines starren Schaufelkranzes 3.2 angeordnet sind, deren Schaufelenden auf einem im Ringelement 3.1 zentrisch angeordneten Hohlzylinder 3.3 für eine spotförmige Luftausströmung befestigt sind. Unter einem starren Schaufelkranz 3.2 werden dabei starre und nicht bewegliche Schaufeln 3.2.1 bis 3.2.n mit einer festen Einstellung zur Erzielung einer vorgegebenen Strömung verstanden. Alternativ können die Schaufeln 3.2.1 bis 3.2.n auch verstellbar oder beweglich angeordnet sein.

Das zweite Luftleitelement 4 ist aus zwei in Längsausdehnung des Luftausströmers 1 nacheinander angeordneten weiteren Schaufelkränzen 4.1 und 4.2 mit mehreren Schaufeln 4.1.1 bis 4.1.n bzw. 4.2.1 bis 4.2.n gebildet, die beweglich in Ringsegmenten 4.3 bis 4.6 gehalten sind. Dabei sind sowohl die radial nach außen weisenden Schaufelenden der Schaufeln 4.1.1 bis 4.1.n und 4.2.1 bis 4.2.n beweglich in den im Gehäuse 2 auch beweglich angeordneten Ringsegmente 4.3 bis 4.6 als auch die radial nach innen weisenden Schaufelenden der Schaufeln 4.1.1 bis 4.1.n und 4.2.1 bis 4.2.n beweglich oder fest auf dem Hohlzylinder 3.3 angeordnet. Zur Aufnahme der Schaufelenden am Hohlzylinder 3.3. ist dieser um den Umfang in jeweils einem Kreis K1 und K2 verteilt mit einer Anzahl von Ausnehmungen 3.4 versehen. Dabei ist eine der Anzahl der weiteren beweglichen Schaufelkränze 4.1, 4.2 entsprechende Anzahl von Kreisen K1, K2 mit jeweils um den Umfang des Hohlzylinders 3.3 verteilt angeordneten Ausnehmungen 3.4 vorgesehen. In nicht näher dargestellter Art und Weise kann das zweite Luftleitelement 4 auch nur einen beweglichen Schaufelkranz 4.1 oder mehr als zwei bewegliche Schaufelkränze umfassen. Auch kann das zweite Luftleitelement 4 in einer weiteren alternativen Ausführungsform eine Kombination aus beweglichen und starren Schaufelkränzen aufweisen.

Wie in Figur 1 dargestellt, sind der starre Schaufelkranz 3.2 des ersten Luftleitelements 3 und die beweglichen Schaufelkränze 4.1 und 4.2 des zweiten Luftleitelements 4 in Längsausdehnung des Hohlzylinders 3.3 und somit des Luftausströmers 1 nacheinander angeordnet.

Zur beweglichen Halterung bzw. einfachen Montage der Schaufeln 4.1.1 bis 4.1.n und 4.2.1 bis 4.2.n sind deren Schaufelenden endseitig mit Stiften 5 bzw. 6 versehen, die in die betreffenden Ausnehmungen 3.4 des Hohlzylinders 3.3 bzw. am anderen Ende in Linienführungen 7 der Ringsegmente 4.3 bis 4.6 beweglich angeordnet sind. Dabei entspricht die Anzahl der Linienführungen 7 und die Anzahl der Ausnehmungen 3.4 der Anzahl der Schaufeln 4.1.1 bis 4.1.n oder 4.2.1 bis 4.2.n des jeweiligen Schaufelkranzes 4.1 bzw. 4.2. Analog zu den Ausnehmungen 3.4 sind die Linienführungen 7 in Kreisen K3 und K4 um den Umfang der Ringsegmente 4.3 bis 4.6 verteilt angeordnet. Der Abstand der Ausnehmungen 3.4 und der Linienführungen 7 der Kreise K1, K2 bzw. K3, K4 wird maßgeblich durch den Abstand der Schaufeln 4.1.1 bis 4.1.n oder 4.2.1 bis 4.2.n des jeweiligen Schaufelkranzes 4.1 bzw. 4.2 bestimmt.

Zur Verdrehung, Verwindung bzw. Verstellung der Schaufeln 4.1.1 bis 4.1.n und 4.2.1 bis 4.2.n sind die Linienführungen 7 vorzugsweise bogenförmig ausgestaltet. Die Linienführungen 7 können aber auch eine andere geeignete Kurvenform aufweisen.

Je nach Vorgabe können die Schaufeln 3.2.1 bis 3.2.n und die Schaufeln 4.1.1 bis 4.1.n und 4.2.1 bis 4.2.n eben oder gekrümmt ausgebildet sein. Bevorzugt sind die Schaufeln 4.1.1 bis 4.1.n und 4.2.1 bis 4.2.n der beweglichen Schaufelkränze 4.1, 4.2 flexibel und verwindbar angeordnet. Darüber hinaus können die Schaufeln 3.2.1 bis 3.2.n und 4.1.1 bis 4.1.n und 4.2.1 bis 4.2.n eine geeignete Form aufweisen und z.B. als Dreieck- oder Viereckflügel ausgebildet sein.

Im Betrieb des zusammengebauten Luftausströmers 1 bildet der Hohlzylinder 3.3 einen inneren Luftführungskanal für eine spotförmige Luftausströmung. Die konzentrisch um den zentrisch angeordneten Hohlzylinder 3.3 angeordneten Ringsegmente 4.3 bis 4.6 bilden eine äußere Wandung für einen äußeren Luftführungskanal zur diffusen Luftausströmung. Somit umgibt der äußere Luftführungskanal den inneren Luftführungskanal und verlauft parallel zu diesem.

Zur Einstellung sowohl der Strömungsrichtung, der Strömungsart als auch der Stromungsmenge ist ein Verstellelement 8 vorgesehen. Mittels des Verstellelementes 8 sind die beweglichen Schaufeln 4.1.1 bis 4.1.n und 4.2.1 bis 4.2 n der beweglichen Schaufelkränze 4.1 bzw. 4.2 gemeinsam und synchron verstellbar. Alternativ können andere geeignete Mittel zum insbesondere separaten oder getrennten Verstellen der Schaufeln 4.1.1 bis 4.1.n und 4.2.1 bis 4.2.n und/oder der Schaufelkränze 4.1 und 4.2 vorgesehen sein.

Wie in Figur 1 gezeigt, ist das Verstellelement 8 strömungsausgangsseitig auf die im montierten Zustand miteinander verbundenen Ringsegmente 4.3 bis 4.6 aufsetzbar und an diesen arretiert. Dabei umfasst das Verstellelement 8 einen Verstellring 8.1, der mit Ausnehmungen 8.2 versehen ist, die in die äußeren Stifte 6 der Schaufeln 4.1.1 bis 4.1.n und 4.2.1 bis 4.2.n eingreifen. Darüber hinaus weist das Verstellelement 8 strömungsausgangsseitig am Verstellring 8.1 einen Rand 8.3 auf, der mit einer Struktur versehen ist, die ein gutes Greifen und Verstellen des Verstellelementes 8 ermöglicht. Ferner kann das Verstellelement 8, wie dargestellt, strömungsausgangsseitig mit festen oder verstellbaren Streben 8.4 versehen sein. Anstelle der Streben 8.4 können auch Lamellen vorgesehen sein.

Um ein Verdrehen oder Verkanten des Verstellelementes 8 im Gehäuse 2 zu vermeiden, ist das Verstellelement 8 an den Ringsegmenten 4.3 bis 4.6 arretierbar angeordnet. Hierzu weisen die Ringsegmente 4.3 bis 4.6 außenseitig eine entsprechende Arretierungssstruktur 4.7 auf. Durch Drehen des Verstellringes 8.1 werden die in den Linienführungen 7 geführten Schaufeln 4.1.1 bis 4.1.n und 4.2.1 bis 4.2.n, in deren Stifte 6 die Ausnehmungen 8.2 des Verstellelementes 8 eingreifen, entsprechend der Kontur der Linienführungen 7, z.B. bogenförmig oder kurvenförmig, verstellt. Dabei werden die Schaufeln 4.1.1 bis 4.1.n und 4.2.1 bis 4.2.n entsprechend verdreht, gewunden oder verstellt, so dass eine Helix-Form für eine Diffusströmung einstellbar ist. Auch kann der äußere Luftführungskanal durch entsprechende Stellung der Schaufeln 4.1.1 bis 4.1.n und 4.2.1 bis 4.2.n geschlossen sein.

Die Figur 1 zeigt ein Ausführungsbeispiel des Verstellelementes 8 als Verstellring 8.1 alternativ kann das Verstellelement 8 auch als Drehknopf und Kegelzahnrad ausgebildet sein.

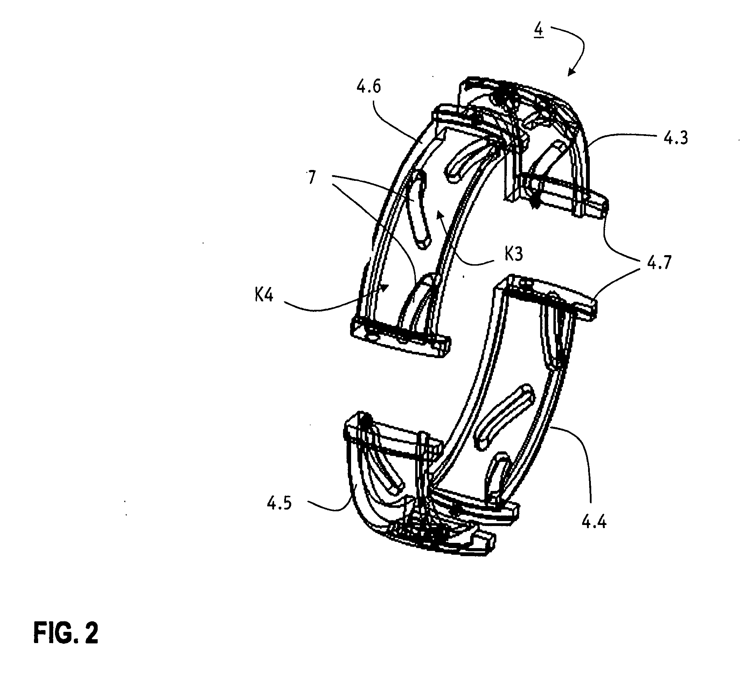

Figur 2 zeigt im Detail die Ringsegmente 4.3 bis 4.6 des zweiten Luftleitelementes 4 gemäß Figur 1. Hierbei ist die Anordnung der Linienführungen 7 über den Umfang verteilt in Kreisen K3 und K4 näher dargestellt. Die Linienführungen 7 des Kreises K3 nehmen im montierten Zustand des Luftausströmer 1 die Stifte 6 der Schaufeln 4.1.1 bis 4.1.n des ersten beweglichen Schaufelkranzes 4.1 und die Linienführungen 7 des Kreises K4 die Stifte 6 der Schaufeln 4.2.1 bis 4.2.n des zweiten beweglichen Schaufelkranzes 4.2 auf.

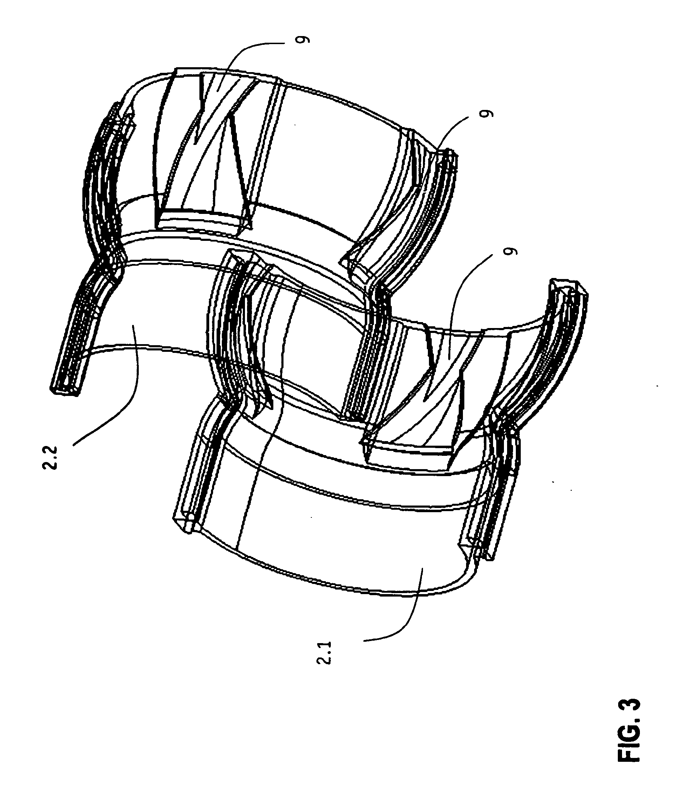

Figur 3 zeigt die beiden Halbschalen 2.1 und 2.2 des Gehäuses 2. Zur Verstellung der Strömungsrichtung des Luftausströmers 1 sind innenseitig in die jeweilige Halbschale 2.1 und 2.2 Führungssicken 9 eingebracht. Dabei bildet das kugelförmige Gehäuse 2 im montierten Zustand eine Kugelpfanne, in welche die im montierten Zustand miteinander verbundenen Ringsegmente 4.3 bis 4.6 in Art eines Kugelgelenks drehbar gelagert sind. Der Luftausströmer 1 wird daher auch als Kugeldüse bezeichnet.

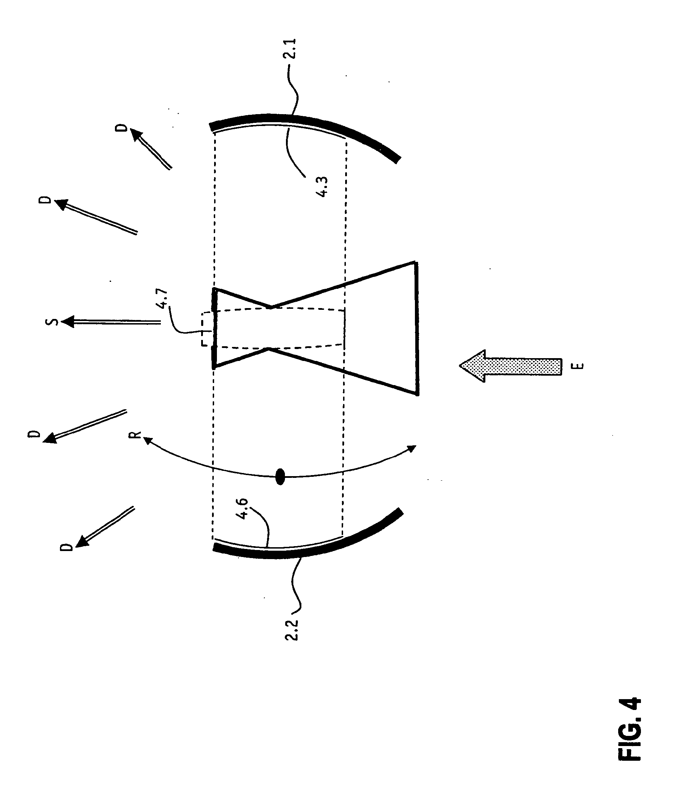

Je nach Vorgabe der einstellbaren Freiheitsgrade ist eine entsprechende Anzahl von Führungssicken 9 innenseitig in das Gehäuse 2, insbesondere in dessen Halbschalen 2.1 bis 2.2 eingebracht. Durch translatorisches Bewegen des Verstellelementes 8 nach oben, nach unten oder zur Seite und/oder durch eine Drehbewegung des Verstellelementes 8 wird für die Eingangsströmung E strömungsausgangsseitig des Luftausströmers 1 eine entsprechende Strömungsrichtung R bzw. Strömungsart - Diffusströmung D oder Spotströmung S - am Luftausströmer 1 eingestellt, wie dies in Figur 4 gezeigt ist.

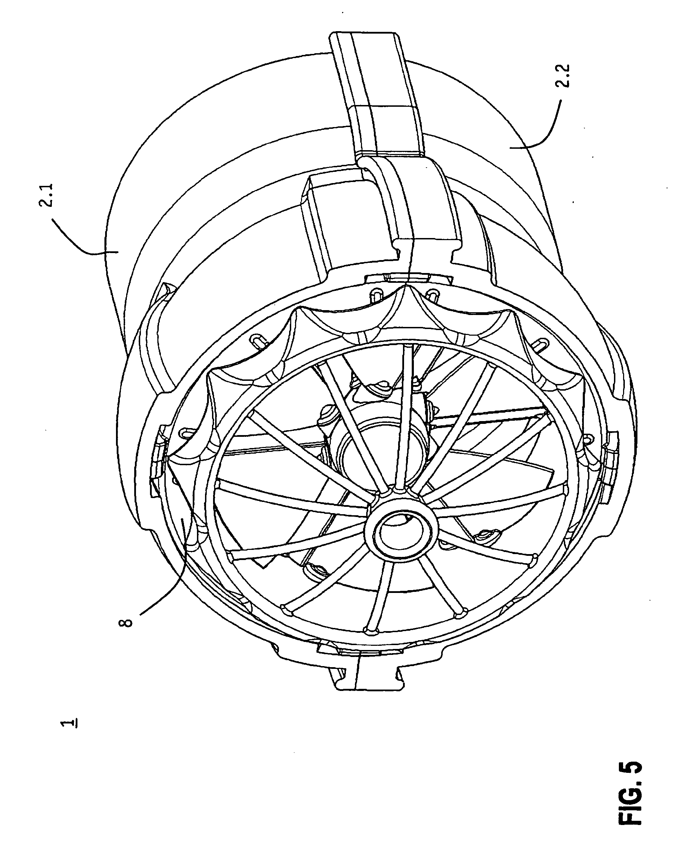

Figur 5 zeigt ein Ausführungsbeispiel für einen zusammengebauten Luftausströmer 1.

Über das gezeigte Ausführungsbeispiel hinaus kann der Luftausströmer auch mehrere gleichartige oder verschiedenartige erste und zweite Luftleitelemente 3 und 4 aufweisen, die beweglich oder starr ausgebildet sind und entlang der Längsausdehnung des Luftausströmers 1 hintereinander angeordnet sind.

## Patentansprüche

1. Luftausströmer (1), insbesondere für eine Klimatisierung eines Fahrzeuginnenraumes, umfassend ein zweiteiliges Gehäuse (2), welches im zusammengebauten Zustand im Wesentlichen kugelförmig ist und in welchem ein erstes Luftleitelement (3) und ein zweites Luftleifielement (4) angeordnet sind, wobei das erste Luftleitelement (3) als ein Ringelement (3.1) ausgebildet ist, an welchem radial nach innen weisend Schaufeln (3.2.1 bis 3.2.n) eines starren Schaufelkranzes (3.2) angeordnet sind, deren Schaufelenden auf einem im Ringelement (3.1) zentrisch angeordneten Hohlzylinder (3.3) für eine spotförmige Luftausströmung befestigt sind, und das zweite Luftleitelement (4) aus mindestens einem weiteren Schaufelkranz (4.1, 4.2) mit mehreren Schaufeln (4.1.1 bis 4.1.n, 4.2.1 bis 4.2.n) gebildet ist, deren jeweils radial nach innen weisendes Schaufelende beweglich auf dem Hohlzylinder (3.3) und deren radial nach außen weisendes Schaufelende beweglich in einer vorgegebenen Anzahl von im Gehäuse (2) frei beweglich angeordneten Ringsegmente (4.3 bis 4.6) angeordnet sind.

2. Luftausströmer nach Anspruch 1, wobei der starre Schaufelkranz (3.2) und der mindestens eine bewegliche Schaufelkranz (4.1, 4.2) in Längsausdehnung des Hohlzylinders (3.3) nacheinander angeordnet sind.

3. Luftausströmer nach Anspruch 1 oder 2, wobei in Längsausdehnung des Hohlzylinders (3.3) mindestens zwei bewegliche Schaufelkränze (4.1, 4.2) vorgesehen sind, die radial nach außen in den Ringsegmenten (4.3 bis 4.6) beweglich angeordnet sind.

4. Luftausströmer nach einem der Ansprüche 1 bis 3, wobei der Hohlzylinder (3.3) um den Umfang in einem Kreis (K1, K2) verteilt mit einer Anzahl von Ausnehmungen (3.4) zur Aufnahme der Schaufelenden des weiteren, beweglichen Schaufelkranzes (4.1, 4.2) versehen ist.

5. Luftausströmer nach einem der Ansprüche 1 bis 4, wobei eine der Anzahl der weiteren beweglichen Schaufelkränze (4.1, 4.2) entsprechende Anzahl von Kreisen (K1, K2) mit jeweils um den Umfang des Hohlzylinders (3.3) verteilt angeordneten Ausnehmungen (3.4) vorgesehen ist.

6. Luftausströmer nach einem der Ansprüche 1 bis 5, wobei die Schaufeln (4.1.1 bis 4.1.n, 4.2.1 bis 4.2.n) des mindestens einen beweglichen Schaufelkranzes (4.1, 4.2) endseitig mit Stiften (5, 6) versehen sind, die an einem Ende in den insbesondere kreisförmigen Ausnehmungen (3.4) des Hohlzylinders (3.3) und am anderen Ende in Linienführungen (7) der Ringsegmente (4.3 bis 4.6) beweglich angeordnet sind.

7. Luftausströmer nach Anspruch 6, wobei die Linienführungen (7) im Wesentlichen bogenförmig verlaufen.

8. Luftausströmer nach einem der Ansprüche 1 bis 7, wobei die Schaufeln (3.2.1 bis 3.2.n, 4.1.1 bis 4.1.n, 4.2.1 bis 4.2.n) des jeweiligen Schaufelkranzes (3.2, 4.1, 4.2) als Dreieck- oder Viereckflügel ausgebildet sind.

9. Luftausströmer nach einem der Ansprüche 1 bis 8, wobei die Schaufeln (4.1.1 bis 4.1.n, 4.2.1 bis 4.2.n) des beweglichen Schaufelkranzes (4.1,4.2) flexibel ausgebildet und verwindbar gelagert sind.

10. Luftausströmer nach einem der Ansprüche 1 bis 9, wobei die Schaufeln (3.2.1 bis 3.2.n, 4.1.1 bis 4.1.n, 4.2.1 bis 4.2.n) des starren und beweglichen Schaufelkranzes (3.2, 4.1, 4.2) gekrümmt oder eben ausgebildet sind.

11. Luftausströmer nach einem der Ansprüche 1 bis 10, wobei der Hohlzylinder (3.3) einen inneren Luftführungskanal für eine spotförmige Luftausströmung und die Ringsegmente (4.3 bis 4.6) im zusammengebauten Zustand einen äußeren Luftführungskanal zur diffusen Luftausströmung bilden, wobei der äußere Luftführungskanal den inneren Luftführungskanal umgibt und parallel zu diesem verläuft.

12. Luftausströmer nach einem der Ansprüche 1 bis 11, wobei die Schaufeln (4.1.1 bis 4.1.n, 4.2.1 bis 4.2.n) des mindestens einen beweglichen Schaufelkranzes (4.1, 4.2) mittels eines Verstellelementes (8) gemeinsam und synchron verstellbar sind.

13. Luftausströmer nach Anspruch 12, wobei das Verstellelement (8) strömungsausgangsseitig auf die Ringsegmente (4.3 bis 4.6) aufsetzbar ist.

14. Luftausströmer nach Anspruch 12 oder 13, wobei das Verstellelement (8) als ein Verstellring (8.1) ausgebildet ist, der mit Ausnehmungen (8.2) versehen ist, die in die äußeren Stifte (6) der Schaufeln (4.1.1 bis 4.1.n, 4.2.1 bis 4.2.n) des beweglichen Schaufelkranzes (4.1, 4.2) eingreifen, und der strömungsausgangsseitig einen geformten Rand (8.3) aufweist, der auf die Ringsegmente (4.3 bis 4.6) außen umlaufend aufsetzbar ist.

15. Luftausströmer nach Anspruch 12 oder 13, wobei das Verstellelement (8) als Drehknopf und Kegelzahnrad ausgebildet ist.

## Claims

1. An air outlet (1), in particular for an air conditioning system of a vehicle interior, comprising a two-part housing (2) which in the assembled state is substantially ball-shaped and in which a first air guide element (3) and a second air guide element (4) are arranged, wherein the first air guide element (3) is designed as an annular element (3.1) on which radially inwardly directed blades (3.2.1 to 3.2.n) of a rigid blade ring (3.2) are arranged, the blade ends of which are attached to a hollow cylinder (3.3) disposed centrically in the annular element (3.1) for a spot-like air outflow, and the second air guide element (4) is formed by at least one further blade ring (4.1, 4.2) having a plurality of blades (4.1.1 to 4.1.n, 4.2.1 to 4.2.n), the radially inwardly directed blade ends are arranged movably on the hollow cylinder (3.3) and the radially outwardly directed blade ends are arranged movably in a predetermined number of annular segments (4.3 to 4.6) arranged freely movably in the housing (2).

2. The air outlet according to claim 1, wherein the rigid blade ring (3.2) and the at least one movable blade ring (4.1, 4.2) are arranged successively in the longitudinal extension of the hollow cylinder (3.3).

3. The air outlet according to claim 1 or 2, wherein in the longitudinal extension of the hollow cylinder (3.3) at least two movable blade rings (4.1, 4.2) are provided, which are arranged movably in the annular segments (4.3 to 4.6) radially outwardly.

4. An air outlet according to any one of claims 1 to 3, wherein the hollow cylinder (3.3) is provided with a number of recesses (3.4) distributed around the periphery in a circle (K1, K2) for receiving the blade ends of the further movable blade ring (4.1, 4.2).

5. An air outlet according to any one of claims 1 to 4, wherein a number of circles (K1, K2) that corresponds to the number of further movable blade rings (4.1, 4.2) is provided, each having recesses (3.4) distributed around the periphery of the hollow cylinder (3.3).

6. An air outlet according to any one of claims 1 to 5, wherein the blades (4.1.1 to 4.1.n, 4.2.1 to 4.2.n) of the at least one movable blade ring (4.1, 4.2) are provided at the ends with pins (5, 6), which at one end are arranged movably in the, in particular circular-shaped, recesses (3.4) of the hollow cylinder (3.3) and at the other end are arranged movably in line guides (7) of the annular segments (4.3 to 4.6).

7. The air outlet according to claim 6, wherein the line guides (7) have a substantially arc-shaped design.

8. An air outlet according to any one of claims 1 to 7, wherein the blades (3.2.1 to 3.2.n, 4.1.1 to 4.1.n, 4.2.1 to 4.2.n) of the particular blade ring (3.2, 4.1, 4.2) are designed as triangular or square wings.

9. An air outlet according to any one of claims 1 to 8, wherein the blades (4.1.1 to 4.1.n, 4.2.1 to 4.2.n) of the movable blade ring (4.1, 4.2) are flexibly configured and deflectably mounted.

10. An air outlet according to any one of claims 1 to 9, wherein the blades (3.2.1 to 3.2.n, 4.1.1 to 4.1.n, 4.2.1 to 4.2.n) of the rigid and movable blade rings (3.2, 4.1, 4.2) have a curved or flat design.

11. An air outlet according to any one of claims 1 to 10, wherein in the assembled state the hollow cylinder (3.3) forms an inner air guide channel for a spot-shaped air outflow and the annular segments (4.3 to 4.6) form an outer air guide channel for diffuse air outflow, the outer air guide channel surrounding the inner air guide channel and running parallel thereto.

12. An air outlet according to any one of claims 1 to 11, wherein the blades (4.1.1 to 4.1.n, 4.2.1 to 4.2.n) of the at least one movable blade ring (4.1, 4.2) can be adjusted together and synchronously by way of an adjusting element (8).

13. The air outlet according to claim 12, wherein the adjusting element (8) can be placed onto the annular elements (4.3 to 4.6) on the flow outlet side.

14. The air outlet according to claim 12 or 13, wherein the adjusting element (8) is designed as an adjusting ring (8.1), which is provided with recesses (8.2) engaging in the outer pins (6) of the blades (4.1.1 to 4.1.n, 4.2.1 to 4.2.n) of the movable blade ring (4.1, 4.2) and which on the flow outlet side has a shaped edge (8.3) that can be placed on the annular segments (4.3 to 4.6) on the outer periphery thereof.

15. The air outlet according to claim 12 or 13, wherein the adjusting element (8) is designed as a rotary knob and conical gear wheel.

## Revendications

1. Diffuseur d'air (1), en particulier pour la climatisation de l'habitacle d'un véhicule, comprenant un carter (2) en deux parties qui, lorsqu'il est assemblé, est pratiquement sphérique et dans lequel sont disposés un premier élément déflecteur d'air (3) et un deuxième élément déflecteur d'air (4), où le premier élément déflecteur d'air (3) est configuré comme un élément annulaire (3.1) sur lequel sont disposées des ailettes (3.2.1 à 3.2.n) - pointant vers l'intérieur dans le sens radial - d'une couronne fixe (3.2) à ailettes dont les extrémités d'ailettes sont fixées sur un cylindre creux (3.3) disposé de façon centrale dans l'élément annulaire (3.1), pour un écoulement de l'air sous forme de jet dirigé, et le deuxième élément déflecteur d'air (4) est formé par au moins une autre couronne (4.1, 4.2) à ailettes comportant plusieurs ailettes (4.1.1 à 4.1.n, 4.2.1 à 4.2.n) dont l'extrémité d'ailette pointant à chaque fois vers l'intérieur dans le sens radial est disposée en étant mobile sur le cylindre creux (3.3), et dont l'extrémité d'ailette pointant à chaque fois vers l'extérieur dans le sens radial est disposée en étant mobile dans un nombre prédéterminé de segments annulaires (4.3 à 4.6) disposés en étant mobiles librement, dans le carter (2).

2. Diffuseur d'air selon la revendication 1, où la couronne fixe (3.2) à ailettes et la couronne mobile (4.1, 4.2) à ailettes, au moins au nombre de un, sont disposées l'une derrière l'autre dans le sens longitudinal du cylindre creux (3.3).

3. Diffuseur d'air selon la revendication 1 ou 2, où, dans le sens longitudinal du cylindre creux (3.3), il est prévu au moins deux couronnes mobiles (4.1, 4.2) à ailettes qui sont disposées en étant mobiles dans les segments annulaires (4.3 à 4.6), vers l'extérieur dans le sens radial.

4. Diffuseur d'air selon l'une quelconque des revendications 1 à 3, où le cylindre creux (3.3) est doté d'un certain nombre de creux (3.4) servant au logement des extrémités d'ailettes de l'autre couronne mobile (4.1, 4.2) à ailettes et répartis autour de la circonférence en formant un cercle (K1, K2).

5. Diffuseur d'air selon l'une quelconque des revendications 1 à 4, où il est prévu un nombre de cercles (K1, K2) correspondant au nombre des autres couronnes mobiles (4.1, 4.2) à ailettes, lesdits cercles comprenant à chaque fois des creux (3.4) disposés en étant répartis autour de la circonférence du cylindre creux (3.3).

6. Diffuseur d'air selon l'une quelconque des revendications 1 à 5, où les ailettes (4.1.1 à 4.1.n, 4.2.1 à 4.2.n) de la couronne mobile (4.1, 4.2) à ailettes, au moins au nombre de un, sont dotées, aux extrémités, de goupilles (5, 6) qui sont disposées, au niveau d'une extrémité, en étant mobiles dans les creux (3.4) - en particulier de forme circulaire - du cylindre creux (3.3) et, au niveau de l'autre extrémité, en étant mobiles dans des guidages linéaires (7) des segments annulaires (4.3 à 4.6).

7. Diffuseur d'air selon la revendication 6, où les guidages linéaires (7) s'étendent essentiellement de façon arquée.

8. Diffuseur d'air selon l'une quelconque des revendications 1 à 7, où les ailettes (3.2.1 à 3.2.n, 4.1.1 à 4.1.n, 4.2.1 à 4.2.n) de la couronne respective (3.2, 4.1, 4.2) à ailettes sont configurées comme des ailettes triangulaires ou quadrangulaires.

9. Diffuseur d'air selon l'une quelconque des revendications 1 à 8, où les ailettes (4.1.1 à 4.1.n, 4.2.1 à 4.2.n) de la couronne mobile (4.1, 4.2) à ailettes sont configurées en étant flexibles et montées en étant déformables en torsion.

10. Diffuseur d'air selon l'une quelconque des revendications 1 à 9, où les ailettes (3.2.1 à 3.2.n, 4.1.1 à 4.1.n, 4.2.1 à 4.2.n) de la couronne fixe et mobile (3.2, 4.1, 4.2) à ailettes sont configurées en étant courbes ou planas.

11. Diffuseur d'air selon l'une quelconque des revendications 1 à 10, où le cylindre creux (3.3) forme un conduit de guidage d'air intérieur, pour un écoulement de l'air sous forme de jet dirigé, et les segments annulaires (4.3 à 4.6), lorsqu'ils sont assemblés, forment un conduit de guidage d'air extérieur servant à l'écoulement de l'air de façon diffuse, où le conduit de guidage d'air extérieur entoure le conduit de guidage d'air intérieur et s'étend parallèlement à celui-ci.

12. Diffuseur d'air selon l'une quelconque des revendications 1 à 11, où les ailettes (4.1.1 à 4.1.n, 4.2.1 à 4.2.n) de la couronne mobile (4.1, 4.2) à ailettes, au moins au nombre de un, sont réglables de façon commune et synchrone au moyen d'un élément de réglage (8).

13. Diffuseur d'air selon la revendication 12, où l'élément de réglage (8) peut être placé sur les segments annulaires (4.3 à 4.6), côté sortie de l'écoulement.

14. Diffuseur d'air selon la revendication 12 ou 13, où l'élément de réglage (8) est configuré comme une bague de réglage (8.1) qui est dotée de creux (8.2) qui s'engagent dans les goupilles extérieures (6) des ailettes (4.1.1 à 4.1.n, 4.2.1 à 4.2.n) de la couronne mobile (4.1, 4.2) à ailettes, et qui, côté sortie de l'écoulement, présente un bord formé (8.3) qui peut être placé extérieurement, de façon circulaire, sur les segments annulaires (4.3 à 4.6).

15. Diffuseur d'air selon la revendication 12 ou 13, où l'élément de réglage (8) est configuré comme un bouton rotatif et une roue dentée conique.
